# EUROPÄISCHE PATENTSCHRIFT

(11) **EP 0 494 272 B1**
(45) Veröffentlichungstag und Bekanntmachung des Hinweises auf die Patenterteilung: **02.08.1995**
(21) Anmeldenummer: 91909026.6
(22) Anmeldetag: 10.05.1991
(51) Int. Cl.: B60T 8/44

(54) **BLOCKIERGESCHÜTZTE, HYDRAULISCHE BREMSANLAGE**
HYDRAULIC BRAKE SYSTEM WITH ANTI-LOCK
SYSTEME HYDRAULIQUE DE FREINAGE A ANTI-DERAPEUR AUTOMATIQUE

(30) Priorität: 26.07.1990 DE 4023708; 04.03.1991 DE 4106790
(43) Veröffentlichungstag der Anmeldung: 15.07.1992
(73) Patentinhaber: ITT Automotive Europe GmbH, 60488 Frankfurt (DE)
(72) Erfinder: LÜTTEKE, Harald, D-6365 Nieder-Rosbach (DE)
(86) Internationale Anmeldenummer: EP9100876
(87) Internationale Veröffentlichungsnummer: WO9201592

(56) Entgegenhaltungen:
- WO-A-90/06873
- DE-A- 2 643 860
- GB-A- 2 186 042
- GB-A- 2 193 771
- PATENT ABSTRACTS OF JAPAN vol. 11, no. 146 (M-587)(2593) 13 Mai 1987, & JP-A-61 282158 (TOYOTA MOTOR CORP.) 12 Dezember 1986
- PATENT ABSTRACTS OF JAPAN vol. 10, no. 299 (M-524)(2355) 11 Oktober 1986, & JP-A-61 110658 (AKEBONO BRAKE IND. CO.) 28 Mai 1986

## Beschreibung

Die Erfindung bezieht sich auf eine blockiergeschützte hydraulische Bremsanlage, mit mindestens einer Radbremse und einer Hilfsdruckquelle, wobei in die Leitung zwischen der Hilfsdruckquelle und der Radbremse ein Einlaßventil eingesetzt und die Radbremse über ein Auslaßventil an eine Rücklaufleitung angeschlossen ist, wobei in die Leitung zwischen der Hilfsdruckquelle und dem Einlaßventil ein Differenzdruckbegrenzer eingefügt ist, dessen Schließkörper sowohl von der Kraft einer Feder als auch vom Druck in der Radbremse in einem die Leitung öffnenden Sinne beaufschlagt ist.

Eine derartige Bremsanlage ist aus der DE-A-38 42 699 bzw. der WO-A-90/06873 bekannt. Diese beschreibt eine Zweikreisbremsanlage mit einem Tandemhauptzylinder und einer Pumpe für jeden Bremskreis. Die Radbremszylinder stehen über je ein Einlaßventil mit der Druckleitung zur Pumpe bzw. der Bremsleitung zum Hauptbremszylinder und mit je einem Auslaßventil mit der Rücklaufleitung zum Vorratsbehälter in Verbindung. Das Einlaßventil ist normalerweise geöffnet, das Auslaßventil normalerweise geschlossen.

Während einer Bremsung wird das Drehverhalten der Räder laufend überwacht. Wenn eines der Räder droht zu blockieren, dann wird der Antrieb der Pumpe eingeschaltet und das Ein- und Auslaßventil des blockiergefährdeten Rades derart angesteuert, daß in den Radbremsen ein Druck eingestellt wird, der mit einem optimalen Schlupfwert des Rades korrelliert. Zum Senken des Druckes wird das Auslaßventil geöffnet und das Einlaßventil geschlossen. Zum Halten des Druckes sind beide Ventile geschlossen, während zur Drucksteigerung das Einlaßventil geöffnet und das Auslaßventil geschlossen ist.

Die Ein- und Auslaßventile sind elektromagnetisch angesteuerte Ventile mit einem Schließkörper, der auf einem Ventilsitz aufsitzt.

Ein Differenzdruckbegrenzer zwischen der Hilfsdruckquelle und dem Einlaßventil bewirkt ab einem Bremsflüssigkeitsdruck, der größer ist als der Druck, der der Kraft der Ventilfeder entspricht, daß am Einlaßventil ein definiertes, konstantes Druckgefälle vorliegt, das durch die Ventilfeder bestimmt ist. Dieses Druckgefälle kann z.B. auf 25 bar eingestellt werden und ist damit wesentlich geringer, als das Druckgefälle, das üblicherweise bei einer Panik-ABS-Regelungs-Bremsung mit der Bremsanlage auftritt.

Es hat sich aber herausgestellt, daß dynamische Vorgänge in der Rücklaufleitung und im Differenzdruckbegrenzer dazu führen, daß sich der Druck vor dem Einlaßventil auf ein höheres als das gewünschte Maß aufschaukeln kann.

Die Erfindung beruht daher auf der Aufgabe, Maßnahmen zu entwickeln, die bewirken, daß das Druckgefälle am Einlaßventil unter allen Umständen konstant bleibt.

Die Aufgabe wird dadurch gelöst, daß parallel zum Einlaßventil ein Überdruckventil geschaltet wird, das zur Radbremse hin öffnet.

Weitere vorteilhafte Ausführungen des Erfindungsgedankens sind in den Unteransprüchen wiedergegeben. Es sei insbesondere verwiesen auf die Ansprüche 7 bis 10, die die Ausgestaltung des Differenzdruckbegrenzers betreffen.

Um die Schaltung in einer kompakten Einheit zu realisieren, die allen Anforderungen an die Stabilität des Regelvorganges im Differenzdruckbegrenzer genügt, wird vorgeschlagen, daß der Differenzdruckbegrenzer in einem Gehäuse drei Kammern aufweist (Steuerkammer, Einlaßkammer, Auslaßkammer), daß der Ventilkörper als Stufenkolben ausgebildet ist, der eine Ringnut aufweist, daß das Gehäuse mindestens einen Anschluß vorsieht, der in die Ringnut einmündet, und daß ein an die Ringnut anschließender Kolbenteil im Sinne eines Ventilschiebers verschiebbar ist und dabei den Anschluß sperrt.

Wesentlich ist, daß das Differenzdruckbegrenzerventil als Ventilschieber ausgebildet ist, was im weiteren ermöglicht, daß das Überdruckventil im Kolben des Ventilschiebers ausgebildet werden kann.

Anhand von drei Figuren soll der Erfindungsgedanke näher erläutert werden.

Die Fig. 1 zeigt das hydraulische Schaltbild der Bremsanlage, wobei die Darstellung des Hauptzylinders im Schnitt erfolgt.

Fig. 2 zeigt die vorteilhafte Ausgestaltung eines Differenzdruckbegrenzers.

Figur 3 zeigt eine weitere vorteilhafte Ausgestaltung des Differenzdruckbegrenzers.

Die hydraulische Bremsanlage besteht aus einem Hauptbremszylinder 1, dem ein pneumatischer Verstärker 2 vorgeschaltet ist. Der pneumatische Verstärker 2 wird mittels eines Pedals 3 tätig. In der Längsbohrung 4 des Hauptbremszylinders 1 ist ein Schwimmkolben 5 und ein Druckstangenkolben 6 dichtend geführt. Sie begrenzen zwei Arbeitsräume 7 und 8 in der Bohrung 4 des Hauptbremszylinders 1. Sowohl der Druckstangenkolben 6 als auch der Schwimmkolben 5 weisen ein Zentralventil 9 auf, dessen Schließkörper 10 in der Grundposition des Kolbens mittels eines Stößels, der an einem gehäusefesten Anschlag liegt, vom Ventilsitz entfernt gehalten wird. Dadurch besteht eine Verbindung zwischen den Arbeitskammern 7 und 8 und dem Vorratsbehälter 11. Betätigt der Fahrer das Pedal 3, so wird mit Unterstützung durch den pneumatischen Verstärker 2 der Druckstangenkolben 6 in den Hauptbremszylinder hineingeschoben, wodurch das Zentralventil 9 schließt und Druckmittel aus der Arbeitskammer 8 in den angeschlossenen Bremskreis verdrängt wird. Als Folge verschiebt sich auch der Schwimmkolben 5, so daß auch aus der Arbeitskammer 7 Druckmittel verdrängt wird. Beide Arbeitskammern stehen über je eine Bremsleitung 12 mit den Radbremsen 32 des Fahrzeuges in Verbindung, die mit einer Buchstabenkombination bezeichnet sind, wobei die folgenden Abkürzungen gewählt worden sind: V für vorne, H für hinten, L für links und R für rechts.

Dargestellt ist lediglich ein Bremskreis, wobei der nicht dargestellte Kreis entsprechend aufgebaut ist.

Die Bremsanlage beinhaltet weiterhin eine Doppelpumpe 13, die von einem Motor M angetrieben wird. Die Pumpen fördern aus dem Vorratsbehälter 11 über je eine Druckleitung 14 in die Bremsleitungen 12. In die Bremsleitung 12 bzw. in deren Zweigleitungen zu den Radbremsen ist je ein Einlaßventil 15 geschaltet, das elektromagnetisch betätigt und in der Grundstellung offen ist.

Die Radbremsen stehen weiterhin über eine Rücklaufleitung 16 mit dem Vorratsbehälter 11 in Verbindung, wobei in die Rücklaufleitungen bzw. in den Zweigleitungen je ein Auslaßventil 17 angesetzt ist, das ebenfalls elektromagnetisch betätigt, aber in stromlosem Zustand geschlossen ist.

Oberhalb der Einlaßventile 15, also zwischen dem Einlaßventil 15 und der Pumpe 13 bzw. dem Hauptbremszylinder 1 ist je ein Differenzdruckbegrenzer 18 eingeschaltet, dessen Steuerleitung 19 unmittelbar mit der jeweiligen Radbremse verbunden ist.

Parallel zum Einlaßventil 15 und dem Differenzdruckbegrenzer 18 ist ein Rückschlagventil 21 in eine BypassLeitung 20 geschaltet, das zur Radbremse hin sperrt.

Von der Steuerleitung zweigt ein Überdruckventil ab, das die Steuerleitung 19 mit dem Bremsleitungsstück zwischen dem Differenzdruckbegrenzer 18 und dem Einlaßventil 15 verbindet. Das Überdruckventil 30 öffnet zur Steuerleitung hin.

Die normalerweise im Einlaßventil integrierte Blende 31 ist aus regelungscharakteristischen Gründen unmittelbar unterhalb der Einmündung der Steuerleitung in die Bremsleitung angeordnet.

Der Differenzdruckbegrenzer ist im Bild 2 näher dargestellt. Er besteht aus einem Gehäuse mit drei Kammern, die nebeneinander angeordnet sind. Rechts im Bild befindet sich die Auslaßkammer 37, die über das Einlaßventil 15 mit der Radbremse verbunden ist.

Links von der Auslaßkammer 37 befindet sich die Einlaßkammer 38, die mit der Druckleitung 14 bzw. der Bremsleitung 12 verbunden ist. Die Kammern 37 und 38 sind durch eine Wand 22 voneinander getrennt, wobei ein zentrales Loch der Wand 22 den Ventildurchgang bildet. Links von der Einlaßkammer 38 befindet sich die Steuerkammer 23, die über die Steuerleitung 19 unmittelbar mit der Radbremse verbunden ist. Durch die Wand 24 zwischen Einlaßkammer 38 und der Steuerkammer 23 ist ein Ventilschaft 25 dichtend hindurchgeführt, der durch das zentrale Loch der Wand 22 hindurch in die Auslaßkammer 37 ragt. Dort geht er über in einen Ventilschließkörper 26 von kegeliger oder kugeliger Gestalt.

In der Steuerkammer 23 ist eine Ventilfeder 27 angeordnet, die sich einerseits am Gehäuseboden und andererseits am Ventilschaft 25 abstützt. Die Feder 27 drängt den Schaft 25 gegen einen Anschlag 39, wobei in der Grundposition, die durch den Anschlag 39 definiert ist, der Ventilkörper 26 vom Ventilsitz 28 entfernt gehalten ist. Es besteht dann ein freier Druchlaß zwischen der Einlaßkammer 38 und der Auslaßkammer 39.

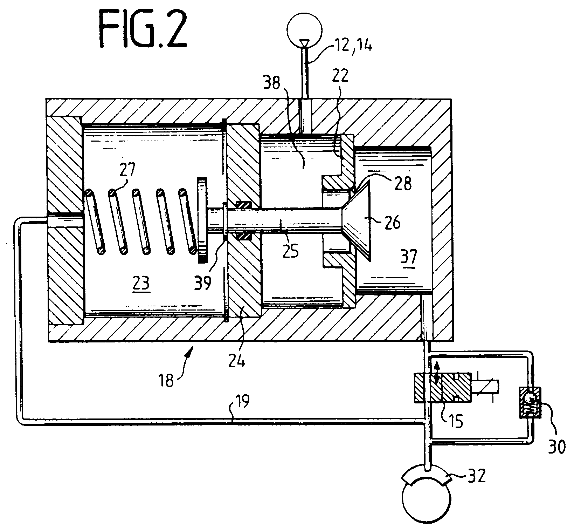

Die Anlage arbeitet in der folgenden Weise:
In der Grundstellung befinden sich alle Teile in der dargestellten Position und die Ventile in den dargestellten Schaltstellungen. Durch Betätigen des Pedals 3 wird Druckmittel aus den Arbeitskammern 7 und 8 in die Bremsleitungen 12 über die offenen Ventile 15 zu den Radbremsen verdrängt, wodurch sich ein Druck in den Bremskreisen aufbaut, der dazu führt, daß die Bremsen betätigt werden und das Fahrzeug verzögert wird. Der Differenzdruckbegrenzer bleibt offen, da sowohl in der Auslaßkammer 37 als auch in der Steuerkammer 23 der gleiche Druck herrscht. Bezogen auf die wirkenden Drücke ist somit der Ventilschaft 25 kraftausgeglichen, so daß die Feder 27 in der Lage ist, das Ventil 26, 28 offen zu halten. Das Überdruckventil 30 ist ebenfalls geschlossen
Wird der Druck in den Bremskreisen durch Steigerung der Pedalkraft soweit erhöht, daß die Räder zu blockieren drohen, dann setzt der Antiblockiermodus ein. Der Motor M der Pumpen 13 wird eingeschaltet und das Einlaßventil 15 geschlossen. Nun kann der Druck in der Druckleitung bzw. in der Bremsleitung gesteigert werden, ohne daß der Druck in den Radbremsen dem folgt. Da nun der Druck in der Auslaßkammer 37 größer ist als in der Steuerkammer 23, wirkt auf den Schaft 25 eine Kraft, die gegen die Federkraft arbeitet und den Schaft in der Darstellung gemäß der Figur 2 nach links verschiebt. Dadurch wird der Ventilkörper 26 auf den Ventilsitz 28 aufgesetzt und die Verbindung zwischen der Einlaßkammer 38 und der Auslaßkammer 37 geschlossen. Die Vorspannung der Feder kann z.B. so eingestellt sein, daß bei einem Druckunterschied von z.B. 25 bar zwischen der Auslaßkammer 37 und der Steuerkammer 23 das Ventil geschlossen wird. Durch Öffnen des Auslaßventils 17 kann der Druck in den Radbremsen noch weiter gesenkt werden. Wird nun, um einen erneuten Druckanstieg in den Radbremsen zu erwirken, das Einlaßventil 15 geöffnet, gleichen sich zunächst die Drücke in der Auslaßkammer 37 und der Steuerkammer 23 wieder an, so daß, sobald die Druckdiffernz wieder 25 bar beträgt, der Ventildurchgang des Differenzdruckbegrenzers geöffnet wird und Druckmittel aus der Pumpe in die Radbremsen nachströmen kann.

Wesentlich ist, daß durch den Differenzdruckbegrenzer am Einlaßventil 15 stets ein definiertes, konstantes Druckgefälle eingestellt wird, sofern der Bremsflüssigkeitsdruck größer ist als der Druck, der der Kraft der Ventilfeder 27 entspricht.

Das Überdruckventil 30 vermeidet, daß auf Grund dynamischer Vorgänge der Druck vor dem Einlaßventil um ca. 25 bar größer wird als in der Radbremse. Sollte nämlich diese Situation eintreten, so öffnet das Überdruckventil und bewirkt einen entsprechenden Druckausgleich. Es wird damit sichergestellt, daß bei geschlossenem Einlaßventil ein gleichmäßig hoher Druckaufbau vor dem Einlaßventil stattfindet.

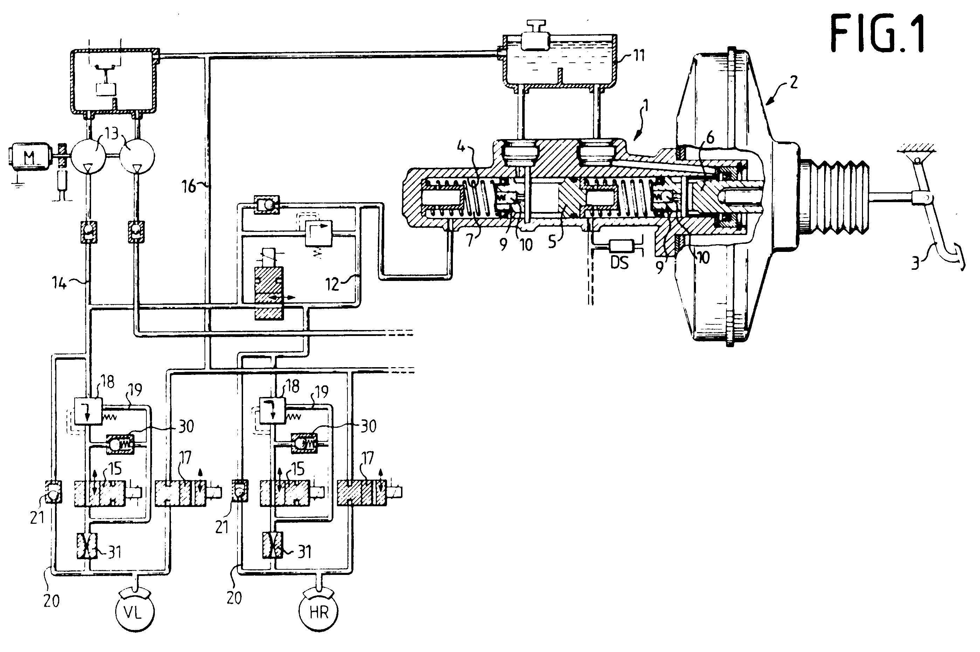

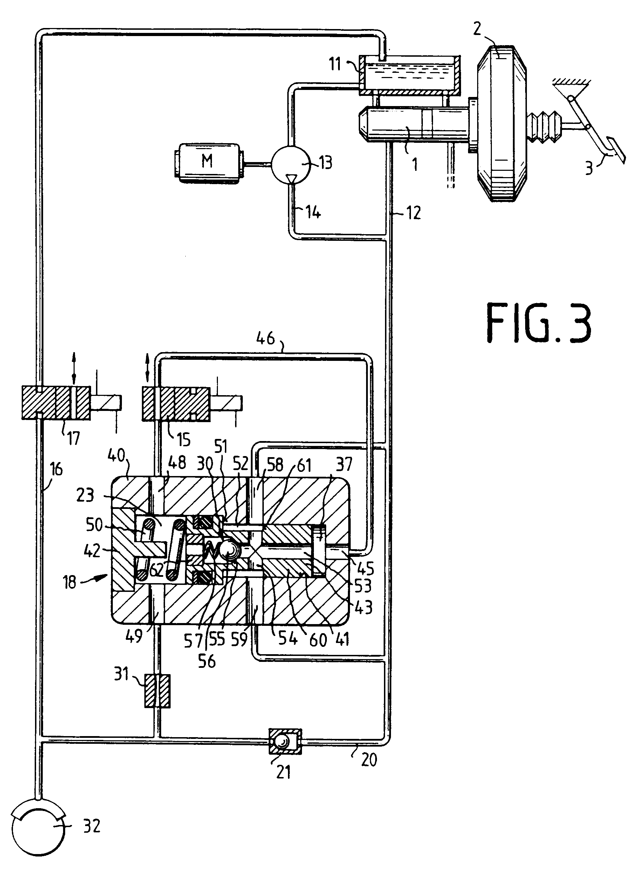

Die Darstellung gemäß Figur 3 entspricht in der Ventilschaltung der Figur 1. Es wurden daher die gleichen Bezugszeichen verwendet. Darüberhinaus gilt folgendes.

Das Bremsleitungsstück 46 zwischen dem Differenzdruckbegrenzer 18 und dem Einlaßventil 15 ist mittels eines Überdruckventils 30 mit der Steuerkammer 23 verbunden. Das Überdruckventil 30 öffnet zur Steuerkammer 23 hin.

Die normalerweise im Einlaßventil integrierte Blende 31 ist aus Gründen, die die Verbesserung der Regelgüte betreffen, unmittelbar unterhalb der Steuerkammer in der Bremsleitung angeordnet.

Der Differenzdruckbegrenzer 18 ist in einem Gehäuse 40 angeordnet, das eine gestufte Sackbohrung 41 aufweist. Die kleinere Stufe liegt weiter innen, während die größere Stufe sich nach außen öffnet, bzw. von einem Stopfen 42 verschlossen ist. In der Sackbohrung ist ein Stufenkolben 43 geführt, der mit seinem im Durchmesser kleineren Teil in der kleineren Stufe der Sackbohrung die Auslaßkammer 37 abtrennt und mit seinem im Durchmesser größeren Teil die Steuerkammer 23 im Bereich der größeren Stufe der Sackbohrung begrenzt.

Die Auslaßkammer 37 steht über einen Gehäuseanschluß 45 und eine Leitung 46 mit dem Einlaßventil 15 in Verbindung. Das Leitungsstück 46 ist Teil der Bremsleitung 12. Die Steuerkammer 23 weist einen ersten Anschluß 48 auf, der mit der anderen Seite des Einlaßventils verbunden ist und einen Anschluß 49, der an die Radbremse anschließt. Zwischen dem Anschluß 49 und der Radbremse 4 ist die Blende 31 eingesetzt.

Der Steuerraum 23 nimmt auch die Steuerfeder 50 auf, die sich einerseits am Stufenkolben 43 und andererseits am Stopfen 42 abstützt. Sie hält den Stufenkolben 43 an einem Anschlag 51, der in diesem Ausführungsbeispiel von der Stufe zwischen dem kleineren und dem größeren Teil der Stufenbohrung gebildet wird.

Der Stufenkolben 43 weist in dem Bereich seines kleineren Druchmessers eine umlaufende Nut 52 auf, die als Einlaßkammer 38 fungiert. Daher besteht ein Anschluß 58, der mit dem Hauptbremszylinder verbunden ist. Ein weiterer Anschluß 59 ist ebenfalls mit dem Hauptbremszylinder verbunden und liegt dem Anschluß 58 gegenüber, so daß eine gleichmäßige Druckbeaufschlagung erfolgt. Durch den Stufenkolben 43 erstreckt sich der Länge nach eine Längsbohrung 53, die von der einen Stirnseite an der Auslaßkammer 37 zur anderen Stirnseite an die Steuerkammer 23 führt. Eine Querbohrung 54 verläuft senkrecht zur Längsbohrung 53 und mündet auf beiden Seiten in die Nut 52 und kreuzt in der Achse des Kolbens 43 die Längsbohrung 53. Auf diese Weise besteht eine Verbindung zwischen der Nut 52 und der Auslaßkammer 37.

Der Teil der Längsbohrung 53, der zur Steuerkammer 23 führt ist mit dem Überdruckventil 30 versehen. Dazu weist die Längsbohrung 53 eine Stufe auf, die als Ventilsitz 55 ausgebildet ist. An diesem Ventilsitz 55 liegt eine Ventilkugel 56 an, die mittels einer Ventilfeder 57 gehalten wird. Die Ventilfeder 57 stützt sich an einem ringförmigen Einsatzstück 62 ab, das in die eine Stirnseite des Stufenkolbens 43 eingesetzt ist. Die Nut 52 wird auf der Seite, die der Einlaßkammer 37 zugewandt ist, begrenzt von einem Kolbenteil 60, das eine Steuerkante 61 aufweist. Die Steuerkante 61 liegt in der gezeigten Grundstellung des Stufenkolbens 43 unmittelbar vor den Anschlüssen 58 und 59. Wird daher der Stufenkolben 43 gegen die Kraft der Feder 50 verschoben, so schiebt sich die Steuerkante 61 über die Anschlüsse 58 und 59, so daß das Kolbenteil 60 die Anschlüsse sperrt und die Nut 52 vom Hauptbremszylinder abtrennt. Damit ist die Bremsleitung 12 unterbrochen. Die Steuerkante 61 stellt in Verbindung mit den Anschlüssen 58, 59 ein Ventil dar.

Weiterhin wird die Druckdifferenz zwischen der Auslaßkammer 37 und der Steuerkammer 23 durch das Überdruckventil 30 auf einen definierten Wert eingestellt.

Die Anlage arbeitet in der folgenden Weise:
In der Grundstellung befinden sich alle Teile in der dargestellten Position und die Ventile in den dargestellten Schaltstellungen. Durch Betätigen des Pedals 3 wird Druckmittel aus dem Hauptbremszylinder 1 in die Bremsleitungen 12 über die offenen Ventile 15 zu den Radbremsen verdrängt, wodurch sich ein Druck in den Bremskreisen aufbaut, der dazu führt, daß die Bremsen betätigt werden und das Fahrzeug verzögert wird. Der Differenzdruckbegrenzer bleibt offen, da sowohl in der Auslaßkammer 37 als auch in der Steuerkammer 23 der gleiche Druck herrscht. Bezogen auf die wirkenden Drücke ist somit der Stufenkolben 43 kraftausgeglichen, so daß die Feder 50 in der Lage ist, das Ventil 58, 59, 60 des Differenzdruckbegrenzers 18 offen zu halten. Das Überdruckventil 30 ist ebenfalls geschlossen.

Wird der Druck in den Bremskreisen durch Steigerung der Pedalkraft soweit erhöht, daß die Räder zu blockieren drohen, dann setzt der Antiblockiermodus ein. Der Antrieb der Pumpe 13 wird eingeschaltet und das Einlaßventil 15 geschlossen. Nun kann der Druck in der Druckleitung bzw. in der Bremsleitung gesteigert werden, ohne daß der Druck in den Radbremsen dem folgt. Da nun der Druck in der Auslaßkammer 37 größer ist als in der Steuerkammer 23, wirkt auf den Stufenkolben 43 eine Kraft, die gegen die Federkraft arbeitet und den Stufenkolben in der Darstellung gemäß der Figur nach links verschiebt. Dadurch wird das Kolbenteil 60 vor die Einmündungen 58, 59 geschoben und die Verbindung zwischen dem Hauptbremszylinder 1 und der Auslaßkammer 37 geschlossen. Die Vorspannung der Feder kann z.B. so eingestellt sein, daß bei einem Druckunterschied von z.B. 25 bar zwischen der Auslaßkammer 37 und der Steuerkammer 23 das Ventil geschlossen wird. Durch Öffnen des Auslaßventils 17 kann der Druck in den Radbremsen noch weiter gesenkt werden. Wird nun, um einen erneuten Druckanstieg in den Radbremsen zu erwirken, das Einlaßventil 15 geöffnet, gleichen sich die Drücke in der Auslaßkammer 37 und der Steuerkammer 23 wieder an, so daß, durch die Steuerfeder 50 das Ventil 58, 59, 60 des Differenzdruckbegrenzers 18 geöffnet wird und Druckmittel aus der Pumpe in die Radbremsen nachströmen kann.

Wesentlich ist, daß durch den Differenzdruckbegrenzer am Einlaßventil 15 stets ein definiertes, konstantes Druckgefälle eingestellt wird, sofern der Bremsflüssigkeitsdruck größer ist als der Druck, der der Kraft der Ventilfeder 50 entspricht.

Das Überdruckventil 30 vermeidet, daß auf Grund dynamischer Vorgänge der Druck vor dem Einlaßventil um mehr als ca. 25 bar größer wird als in der Radbremse. Sollte nämlich diese Situation eintreten, so öffnet das Überdruckventil und bewirkt einen entsprechenden Druckausgleich. Es wird damit sichergestellt, daß bei geschlossenem Einlaßventil ein gleichmäßig hoher Druckaufbau vor dem Einlaßventil stattfindet.

Der Ventilschieber gewährleistet eine ausreichend genaue Regelung des Differenzdruckes. Gleichzeitig ist es möglich, daß am Kolbenteil eine definierte Leckage eingestellt wird, so daß eine definierte Druckmittelmenge pro Zeiteinheit fließt. Wenn diese Menge etwa den Regelbedarf gewährleistet, kann auf ein Schalten des Einlaßventils 15 verzichtet werden, wodurch eine Geräuschentwicklung noch weiter vermindert wird.

### Bezugszeichenliste:

- 1: Hauptbremszylinder
- 2: pneumatischer Verstärker
- 3: Pedal
- 4: Bohrung
- 5: Schwimmkolben
- 6: Druckstangenkolben
- 7: Arbeitskammer
- 8: Arbeitskammer
- 9: Zentralventil
- 10: Schließkörper
- 11: Vorratsbehälter
- 12: Bremsleitung
- 13: Pumpe
- 14: Druckleitung
- 15: Einlaßventil
- 16: Rücklaufleitung
- 17: Auslaßventil
- 18: Differenzdruckbegrenzer
- 19: Steuerleitung
- 20: Bypass-Leitung
- 21: Rückschlagventil
- 22: Wand
- 23: Steuerkammer
- 24: Trennwand
- 25: Ventilschaft
- 26: Ventilkörper
- 27: Ventilfeder
- 28: Ventilsitz
- 30: Überdruckventil
- 31: Blende
- 32: Radbremse
- 37: Auslaßkammer
- 38: Einlaßkammer
- 39: Anschlag
- 40: Gehäuse
- 41: gestufte Sackbohrung
- 42: Stopfen
- 43: Stufenkolben
- 45: Anschluß
- 46: Leitung
- 48: Anschluß
- 49: Anschluß
- 50: Steuerfeder
- 51: Anschlag
- 52: Nut
- 53: Längsbohrung
- 54: Querbohrung
- 55: Ventilsitz
- 56: Ventilkugel
- 57: Ventilfeder
- 58: Anschluß
- 59: Anschluß
- 60: Kolbenteil
- 61: Steuerkante
- 62: Einsatzstück

## Patentansprüche

1. Blockiergeschützte, hydraulische Bremsanlage mit mindestens einer Radbremse und einer Hilfsdruckquelle, wobei in die Druckleitung zwischen der Hilfsdruckquelle und der Radbremse ein Einlaßventil eingesetzt und die Radbremse über ein Auslaßventil an eine Rücklaufleitung angeschlossen ist, wobei in die Leitung zwischen der Hilfsdruckquelle und dem Einlaßventil ein Differenzdruckbegrenzer eingefügt ist, dessen Schließkörper sowohl von der Kraft einer Feder als auch vom Druck in der Radbremse in einem die Leitung öffnenden Sinne beaufschlagt ist, dadurch **gekennzeichnet**, daß parallel zum Einlaßventil (15) ein Überdruckventil geschaltet ist, das zur Radbremse hin öffnet.

2. Bremsanlage nach Anspruch 1, dadurch **gekennzeichnet,** daß die Bremsanlage einen pedalbetätigten Hauptbremszylinder (1) aufweist, dessen Arbeitskammer (7, 8) mittels einer Bremsleitung (12) an die Leitung zwischen der Hilfsdruckquelle (13) und dem Differenzdruckbegrenzer (18) anschließt.

3. Bremsanlage nach Anspruch 1, dadurch **gekennzeichnet,** daß die Rücklaufleitung (16) in einen Vorratsbehälter (11) mündet und die Hilfsdruckquelle mindestens eine Pumpe (13) aufweist, die aus dem Vorratsbehälter (11) fördert.

4. Bremsanlage nach Anspruch 2, dadurch **gekennzeichnet,** daß der Druck am Ausgang der Hilfsdruckquelle (13) proportional zur Fußkraft eingestellt ist.

5. Bremsanlage nach Anspruch 4, dadurch **gekennzeichnet,** daß der Ausgang der Hilfsdruckquelle über ein Druckbegrenzungsventil (9) an den Vorratsbehälter (11) anschließt, wobei das Druckbegrenzungsventil (9) von der Pedalkraft angesteuert ist.

6. Bremsanlage nach Anspruch 5, dadurch **gekennzeichnet,** daß der Hauptbremszylinder (1) mindestens ein Zentralventil (9) aufweist, das in dem die Arbeitskammern (7, 8) begrenzenden Kolben (6, 5) eingesetzt ist.

7. Bremsanlage nach Anspruch 1, dadurch **gekennzeichnet,** daß der Differenzdruckbegrenzer (18) in einem Gehäuse drei Kammern aufweist (Steuerkammer (23), Einlaßkammer (38), Auslaßkammer (37), wobei ein Durchlaß zwischen der Einlaß- und der Auslaßkammer mittels eines Ventilkörpers (26) verschließbar ist, dessen Schaft (25) dichtend durch eine Trennwand (24) zwischen der Einlaß- (38) und der Steuerkammer (23) geführt ist.

8. Bremsanlage nach Anspruch 7, dadurch **gekennzeichnet,** daß die Steuerkammer (23) mit der Radbremse, die Einlaßkammer (38) mit der Hilfsdruckquelle (13), und die Auslaßkammer (37) über das Einlaßventil (15) ebenfalls mit den Radbremsen verbunden ist.

9. Bremsanlage nach Anspruch 7, dadurch **gekennzeichnet,** daß in der Steuerkammer eine Feder (27) angeordnet ist, die sich einerseits am Gehäuse und andererseits am Ventilschaft (25) abstützt, wobei die Federkraft den Ventilkörper (26) vom Ventilsitz (28) wegdrängt.

10. Bremsanlage nach einem der vorhergehenden Ansprüche dadurch **gekennzeichnet**, daß zwischen der Einmündung der Steuerleitung (19) in die Bremsleitung unterhalb des Einlaßventils und der Radbremse ein normalerweise im Einlaßventil integrierte Blende (31), angeordnet ist.

11. Bremsanlage nach Anspruch 1, dadurch **gekennzeichnet**, daß der Differenzdruckbegrenzer (18) in einem Gehäuse (40) drei Kammern aufweist (Steuerkammer (23), Einlaßkammer (52), Auslaßkammer (37), daß der Ventilkörper als Stufenkolben (43) ausgebildet ist, der eine Ringnut (52) aufweist, daß das Gehäuse mindestens einen Anschluß (58, 59) vorsieht, der in die Ringnut (52) einmündet, und daß ein an die Ringnut anschließender Kolbenteil (60) im Sinne eines Ventilschiebers verschiebbar ist und dabei den Anschluß (58, 59) sperrt.

12. Bremsanlage nach Anspruch 11, dadurch **gekennzeichnet,** daß die Steuerkammer (23) mit der Radbremse, die Einlaßkammer (Ringnut 52) mit der Hilfsdruckquelle (13), und die Auslaßkammer (37) über das Einlaßventil (15) ebenfalls mit den Radbremsen verbunden ist.

13. Bremsanlage nach Anspruch 11, dadurch **gekennzeichnet**, daß der Kolben (43) eine Längsbohrung (53) und eine Querbohrung (54) aufweist, die die Nut (52) mit der Auslaßkammer (37) und der Steuerkammer (23) verbindet, wobei in die Verbindung zur Steuerkammer (23) das Überdruckventil (30) eingesetzt ist, wobei der Ventilsitz (55) vom Kolben (43) getragen wird.

14. Bremsanlage nach Anspruch 11, dadurch **gekennzeichnet**, daß das Kolbenteil (60) einen geringfügig kleineren Durchmesser aufweist als der entsprechende Bohrungsabschnitt, so daß ein definierter Leckagestrom am Kolben vorbei zwischen der Ringnut (52) und der Auslaßkammer (37) erfolgt.

## Claims

1. An anti-lock hydraulic brake system with at least one wheel brake and an auxiliary pressure source, wherein an inlet valve is inserted into the pressure line between the auxiliary pressure source and the wheel brake and the wheel brake is connected to a return line via an outlet valve, wherein a differential pressure limiter is interposed in the line between the auxiliary pressure source and the inlet valve, the closure member of which is acted upon by both the force of a spring and the pressure in the wheel brake in a manner opening the line,
**characterized** in that a pressure relief valve opening towards the wheel brake is connected in parallel to the inlet valve (15).

2. A brake system as claimed in claim 1,
**characterized** in that the brake system includes a pedal-operated master brake cylinder (1) having a working chamber (7, 8) connected by way of a brake line (12) to the line between the auxiliary pressure source (13) and the differential pressure limiter (18).

3. A brake system as claimed in claim 1,
**characterized** in that the return line (16) terminates into a supply reservoir (11) and the auxiliary pressure source comprises at least one pump (13) supplying fluid out of the supply reservoir (11).

4. A brake system as claimed in claim 2,
**characterized** in that the pressure at the outlet of the auxiliary pressure source (13) is adjusted proportionally to the pedal force.

5. A brake system as claimed in claim 4,
**characterized** in that the outlet of the auxiliary pressure source connects via a pressure-limiting valve (9) to the supply reservoir (11), the pressure-limiting valve (9) being operated by the pedal force.

6. A brake system as claimed in claim 5,
**characterized** in that the master brake cylinder (1) comprises at least one central valve (9) which is inserted into the piston (6, 5) confining the working chambers (7, 8).

7. A brake system as claimed in claim 1,
**characterized** in that the differential pressure limiter (18) includes a housing defining three chambers, a control chamber (23), an inlet chamber (38), and an outlet chamber (37), a passage between the inlet chamber and the outlet chamber being closable by means of a valve member (26), the shaft (25) of which is sealingly guided through a partition wall (24) between the inlet chamber (38) and the control chamber (23).

8. A brake system as claimed in claim 7,
**characterized** in that the control chamber (23) is connected to the wheel brake, the inlet chamber (38) is connected to the auxiliary pressure source (13), and the outlet chamber (37) is also connected via the inlet valve (15) with the wheel brakes.

9. A brake system as claimed in claim 7,
**characterized** in that the control chamber houses a spring (27) which bears against the housing, on one end, and the valve shaft (25), on the other end, the spring force urging the valve member (26) away from the valve seat (28).

10. A brake system as claimed in any one of the preceding claims,
**characterized** in that a restrictor (31), normally integrated in the inlet valve, is arranged between the control line's (19) junction into the brake line downstream of the inlet valve and the wheel brake.

11. A brake system as claimed in claim 1,
**characterized** in that the differential pressure limiter (18) includes a housing (40) defining three chambers, a control chamber (23), an inlet chamber (52), and an outlet chamber (37), in that the valve member is designed as a stepped piston (43) having an annular groove (52), in that the housing is provided with at least one port (58, 59) terminating into the annular groove (52), and in that a piston part (60) adjacent to the annular groove is slidable in the way of a valve slide to close the port (58, 59).

12. A brake system as claimed in claim 11,
**characterized** in that the control chamber (23) is connected to the wheel brake, the inlet chamber (annular groove 52) is connected to the auxiliary pressure source (13), and the outlet chamber (37) is also connected via the inlet valve (15) with the wheel brakes.

13. A brake system as claimed in claim 11,
**characterized** in that the piston (43) includes a longitudinal bore (53) and a transverse bore (54), which connects the groove (52) with the outlet chamber (37) and the control chamber (23), while the pressure relief valve (30) is inserted into the connection to the control chamber (23), and the valve seat (55) is carried by the piston (43).

14. A brake system as claimed in claim 11,
**characterized** in that the piston part (60) has a slightly smaller diameter than the corresponding bore portion so that a defined amount of leakage flows past the piston between the annular groove (52) and the outlet chamber (37).

## Revendications

1. Système hydraulique de freinage à antiblocage, comprenant au moins un frein de roue et une source de pression auxiliaire, tandis qu'une valve d'entrée est interposée dans la conduite de pression située entre la source de pression auxiliaire et le frein de roue, ce frein de roue étant raccordé à une conduite de retour par l'intermédiaire d'une valve de sortie, et qu'il est interposé, dans la conduite et entre la source de pression auxiliaire et la valve d'entrée, un limiteur de pression différentielle dont l'obturateur est soumis à la fois à la force d'un ressort et à la pression régnant dans le frein de roue, d'une manière tendant à ouvrir la conduite, caractérisé en ce qu'une valve de surpression est montée en parallèle à la valve d'entrée (15), cette valve de surpression s'ouvrant vers le frein de roue.

2. Système de freinage selon la revendication 1, caractérisé en ce que le système de freinage comprend un maître-cylindre de frein (1) qui est actionné par une pédale et dont une chambre de travail (7, 8) est raccordée au moyen d'une conduite de frein (12) à la conduite située entre la source de pression auxiliaire (13) et le limiteur de pression différentielle (18).

3. Système de freinage selon la revendication 1, caractérisé en ce que la conduite de retour (16) débouche dans un réservoir de stockage (11) et la source de pression auxiliaire comprend au moins une pompe (13) qui permet un refoulement à partir du réservoir de stockage (11).

4. Système de freinage selon la revendication 2, caractérisé en ce que la pression à la sortie de la source de pression auxiliaire (13) est proportionnelle à la force exercée au pied.

5. Système de freinage selon la revendication 4, caractérisé en ce que la sortie de la source de pression auxiliaire est raccordée au réservoir de stockage (11) par l'intermédiaire d'une valve de limitation de pression (9), la valve de limitation de pression (9) étant commandée par la force exercée sur la pédale.

6. Système de freinage selon la revendication 5, caractérisé en ce que le maître-cylindre de frein (1) comporte au moins une valve centrale (9) qui est disposée dans le piston (6, 5) délimitant les chambres de travail (7, 8).

7. Système de freinage selon la revendication 1, caractérisé en ce que le limiteur de pression différentielle (18) comprend, dans un boîtier, trois chambres (chambre de commande (23), chambre d'entrée (38), chambre de sortie (37)), tandis qu'un passage entre la chambre d'entrée et la chambre de sortie est agencé de façon à pouvoir être fermé au moyen d'un obturateur (26) dont la tige (25) est guidée d'une manière étanche à travers une paroi de séparation (24) située entre la chambre d'entrée (38) et la chambre de commande (23).

8. Système de freinage selon la revendication 7, caractérisé en ce que la chambre de commande (23) est raccordée au frein de roue, la chambre d'entrée (38) est raccordée à la source de pression auxiliaire (13) et la chambre de sortie (37) est reliée aussi aux freins de roue par l'intermédiaire de la valve d'entrée (15).

9. Système de freinage selon la revendication 7, caractérisé en ce que, dans la chambre de commande, il est disposé un ressort (27) qui prend appui d'une part sur le boîtier et d'autre part sur la tige de valve (25), la force exercée par le ressort repoussant l'obturateur (26) du siège de valve (28).

10. Système de freinage selon l'une des revendications précédentes, caractérisé en ce qu'un étranglement (31), normalement intégré dans la valve d'entrée, est disposé entre le débouché de la conduite de commande (19) dans la conduite de frein, au-dessous de la valve d'entrée, et le frein de roue.

11. Système de freinage selon la revendication 1, caractérisé en ce que le limiteurde pression différentielle (18) comporte, dans un boîtier (40), trois chambres (chambre de commande (23), chambre d'entrée (52), chambre de sortie (37)), en ce que l'obturateur est réalisé sous la forme d'un piston étagé (43) qui comporte une gorge annulaire (52), en ce que le boîtier comporte au moins un raccord (58, 59) qui débouche dans la gorge annulaire (52) et en ce qu'une partie de piston (60) adjacente à la gorge annulaire est agencée de manière à pouvoir être déplacée à la façon d'un tiroir de valve et obture ainsi le raccord (58, 59).

12. Système de freinage selon la revendication 11, caractérisé en ce que la chambre de commande (23) est raccordée au frein de roue, la chambre d'entrée (gorge annulaire 52) est raccordée à la source de pression auxiliaire (13) et la chambre de sortie (37) est reliée aussi aux freins de roue par l'intermédiaire de la valve d'entrée (15).

13. Système de freinage selon la revendication 11, caractérisé en ce que le piston (43) comporte un passage longitudinal (53) et un passage transversal (54) qui font communiquer la gorge (52) avec la chambre de sortie (37) et la chambre de commande (23), tandis que la valve de surpression (30) est disposée dans la liaison avec la chambre de commande (23), le siège de valve (55) étant porté par le piston (43).

14. Système de freinage selon la revendication 11, caractérisé en ce que la partie de piston (60) a un diamètre légèrement plus petit que la section d'alésage associée, de sorte qu'un débit déterminé de fuite passe le long du piston entre la gorge annulaire (52) et la chambre de sortie (37).
